# EUROPEAN PATENT SPECIFICATION

(11) **EP 3 442 672 B1**
(45) Date of publication and mention of the grant of the patent: **07.06.2023**
(21) Application number: 17781992.7
(22) Date of filing: 12.04.2017
(51) Int. Cl.: A62D 3/00, E02D 3/12, E02D 31/00, B09B 1/00, B09B 3/00, B09C 1/00, C04B 18/12, C04B 28/00, C04B 111/27

(54) **METHOD FOR MANUFACTURING A MINERAL SEALING STRUCTURE**
VERFAHREN ZUR HERSTELLUNG EINES MINERALISCHEN DICHTUNGSSTRUKTUR
PROCÉDÉ DE FABRICATION DE STRUCTURE D'ÉTANCHÉITÉ MINÉRALE

(30) Priority: 15.04.2016 FI 20165326
(43) Date of publication of application: 20.02.2019
(73) Proprietor: Solid Liner OY, 91500 Muhos (FI)
(72) Inventor: KUJALA, Kauko, 91500 Muhos (FI); GEHÖR, Seppo, 90570 Oulu (FI)
(74) Representative: Berggren Oy
(86) International application number: PCT/FI2017/050275
(87) International publication number: WO 2017/178708

(56) References cited:
- EP-A2- 0 291 672
- CN-A- 103 466 981
- KR-A- 20110 058 472
- US-A- 4 981 394
- US-A- 5 090 843
- US-A1- 2009 311 048
- AHN JOO SUNG ET AL: "An engineered cover system for mine tailings using a hardpan layer: A solidification/stabilization method for layer and field performance evaluation", JOURNAL OF HAZARDOUS MATERIALS, ELSEVIER, AMSTERDAM, NL, vol. 197, 22 September 2011 (2011-09-22), pages 153-160, XP028597995, ISSN: 0304-3894, DOI: 10.1016/J.JHAZMAT.2011.09.069
- FENG RAO ET AL: "Geopolymerization and Its Potential Application in Mine Tailings Consolidation: A Review", MINERAL PROCESSING AND EXTRACTIVE METALLURGY REVIEW, vol. 36, no. 6, 3 June 2015 (2015-06-03), pages 399-409, XP055639511, US ISSN: 0882-7508, DOI: 10.1080/08827508.2015.1055625

## Description

The invention relates to a method for manufacturing a poorly water-permeable mineral sealing structure, in which method a material layer is formed of a sealing material containing reactive binding agent, and the material layer is let to strengthen to a so-called synthetic hardpan layer. In addition, the disclosure, which is not claimed, relates to a mineral sealing structure manufactured using the method.

In the ore concentration processes, there are generated large amounts of aqueous waste, so-called tailings, and waste rock which is classified as waste in quarrying. In mining areas, tailings are stored in tailings ponds, the surface of which can partly be covered by water separating from the tailings. From the tailings ponds, water is led into clarification basins, from which the clarified water is returned to the concentration process or led into waterways through a purification plant. Aqueous waste is generated in abundance especially in the quarrying and concentration of building stones and limestones as well as chemical and fertilizer minerals.

During mining, the task of the foundation and dam structures of tailings ponds is to prevent the substances detrimental to the environment and ground water dissolving from the tailings to travel outside the ponds. After mining, the tailings ponds are closed with covering structures. The task of the covering structures is to prevent the filtration water and oxygen from accessing the tailings in order to prevent the formation of acidic filtration waters. One sealing solution commonly used in the foundation structures of ponds is a mineral sealing layer, which is built of clay, silt or fine fraction moraine. The building of mineral sealing layers is economically profitable only if suitable soil is available within a reasonable transport distance. The sealing layer can also be built of artificial material, such as HOPE film, bitumen membrane or bentonite mat. Film or mat type seals are expensive and they require a well levelled and compacted foundation layer below and a protective layer protecting from mechanical wear above to keep the films intact.

A so-called hardpan layer is naturally formed to the surface layer of sulphidic tailings ponds, caused by the impact of oxidation and precipitation, the layer having the ability to prevent oxygen and water from penetrating the structure. A natural hardpan layer is formed slowly, and the layer easily becomes non-uniform and discontinuous. The formation of the hardpan layer can be accelerated and the characteristics of the layer can be affected by adding to the structure different industrial by-products as such or post-processed. Problematic with the formation of the hardpan layer is how to bring the material promoting the formation of the hardpan layer to the pond site in a sufficiently cost-effective way. The hardpan layer formed can also break locally, for example, due to ground settlement so that its sealing ability deteriorates significantly.

In document US 2009/0311048 A1 there is known a method for the formation of a so-called synthetic hardpan layer to stabilize mineral waste rich in oxygen and sulphate. In the method, a hardpan layer is formed onto the mineral waste by spreading a layer of material containing calcium and iron compounds on the waste.

Ahn Joo Sung et al: "An engineered cover system for mine tailings using a hardpan layer: A solidification/stabilization method for layer and field performance evaluation", Journal of Hazardous Materials, Elsevier, Amsterdam, NL, vol. 197, 22 September 2011 (2011-09-22), pages 153-160, discloses a cover system for mine tailings with a solidified layer was developed in this study to reduce water infiltration, acid generation and sulfide oxidation. $

US 5 090 843 A discloses a chemical seal for a landfill, mill or mine tailings site, and other solid waste disposal sites.

The aim of the invention is to introduce a method for the manufacture of a poorly water permeable mineral sealing structure and a mineral sealing structure, which is not claimed, with which problems relating to the known technology can be reduced.

The objects of the invention are achieved by a method and sealing structure characterized in what is presented in the independent patent claims. Some advantageous embodiments of the invention are presented in the dependent patent claims.

The object of the invention is a method for the manufacture of a poorly water permeable mineral sealing structure. The term "poorly water permeable" refers here to a structure, the hydraulic conductivity of which is at most 1*10⁻⁸ m/s, preferably at most 1*10⁻⁹ m/s. In practice, such a sealing structure is practically waterproof. In the method, a material layer is formed of a sealing material containing magnesium compounds and/or calcium compounds as reactive binding agent, and the material layer is let to strengthen into a so-called synthetic hardpan layer. As well known, the hardpan layer has low hydraulic conductivity, an ability to bind detrimental substances and low oxygen permeability so that it functions well as a sealing structure. In the method of the invention, the consolidating material layer is formed of a sealing material, at least a part of which is waste fraction generated in the concentration process of the mining industry, such as so called tailings or deposit, which is processed thermally by heating to a temperature of at least 300°C, preferably to at least 750°C, most preferably to at least 800°C to improve the reactive characteristics of the waste fraction. Preferably, as large a part of the sealing material as possible is waste fraction.

Waste fraction, such as tailings, contains different minerals and compounds, the quantity and quality of which depend on the composition of the ore to be concentrated and on the substances and chemicals used in the concentration process. In many mines, the generated waste fraction contains at least poorly reactive compounds in addition to detrimental substances, and/or compounds that can be relatively easily made to be reactive. In the invention, the ability of the reactive substances in the waste fraction or substances to be formed into it to form geo-polymeric bonds is used, thus accelerating the formation of the hardpan layer. The mass of reactive compounds in the sealing material or to be formed into the sealing material can be 20-80%, preferably 30-60%, most preferably approximately 40% of the entire mass of the sealing material.

In an advantageous embodiment of the method of the invention, magnesium compounds, preferably magnesium oxide MgO or magnesium carbonate MgCO₃ are arranged into the sealing material. Alternatively or additionally, calcium compounds, preferably calcium oxide CaO, calcium hydroxide Ca(OH)₂ or calcium carbonate CaCO₃ can be arranged into the sealing material. Magnesium oxide is a highly reactive substance, and by means of it, magnesium-based geo-polymeric bonds can easily be formed. Waste fractions can naturally contain the required amount of magnesium and/or calcium compounds in the sealing material. If this is not the case, a necessary compound can be added into the sealing material.

In the invention the waste fraction, such as tailings, are processed thermally to provide the sealing material with pozzolanic characteristics. Thermal processing refers to the heating of the waste fraction into an elevated temperature and holding it in this temperature for so long that substantially all reactions to be achieved by heating have time to occur. After this, the waste fraction is allowed to cool down. The temperature of the thermal processing can be chosen on the basis of the compounds in the waste fraction and the reactions to be achieved by heating. The waste fraction is heated to the temperature of 300°C so that free water and OH compounds are discharged from the waste fraction. Discharging the OH groups changes the composition of the waste fraction so that the waste fraction is provided with pozzolanic characteristics. When the waste fraction is heated to a temperature of over 750°C, the magnesite in it disintegrates into highly reactive magnesium oxide and carbon dioxide. The increase in the amount of magnesium oxide accelerates significantly the progress of reactions and improves the strength of the generated bonds. When the waste fraction is heated to a temperature of over 800°C, part of the sulphate ions in the compounds becomes reduced, which further accelerates the occurrence of reactions. Naturally, the thermal processing of the waste fraction is conducted before the formation of the sealing material layer.

In a third advantageous embodiment of the invention the waste fraction is processed chemically to adjust the speed of the strengthening reaction and the characteristics of the forming strengthening material layer. In chemical processing, phosphorus, slag of the steel industry, ash and/or reactive silicon compound, preferably amorphic silicon can be added into the waste fraction. Alternatively or additionally, the waste fraction can be alkalized with sodium and/or potassium compounds, preferably sodium silicate. The chemical processing of the waste fraction is conducted before the formation of the sealing material layer.

In yet another advantageous embodiment of the invention a lower layer is formed of the sealing material, a water permeable reinforcement layer is installed on top of the lower material layer, and an upper layer of the sealing material is formed on top of the reinforcement layer. The reinforcement layer can be, for example, a filter cloth commonly used in earthworks, geotextile or web. The reinforcement layer attaches from both sides to the strengthening sealing material, thus improving the tensile strength of the material layer. The improved tensile strength reduces the formation of cracks in the material layer, for example, in connection with ground settlement.

In yet another advantageous embodiment of the invention a lower neutralizing protective layer is formed below the strengthening material layer. Alternatively or additionally, an upper neutralizing protective layer can be formed above the strengthening material layer. The protective layers are formed of alkaline stone materials, such as calcite, dolomite or magnesite sand, ash or slag. The task of the protective layers is to neutralize the leachate of the hardpan layer and reduce the vertical hydraulic conductivity. The upper neutralizing protective layer also prevents dusting and can function as substrate.

In yet another advantageous embodiment of the invention the strengthening material layer is formed on top of the tailings layer, and the tailings layer is mixed of its surface section with the material of the strengthening material layer. Thus, a gradually changing transition zone is formed to the boundary surface of the layers instead of a sharp boundary surface.

In yet another advantageous embodiment of the present disclosure, which is not claimed, there is fabricated a sealing structure for a tailings pond of mining industry, waste rock heap, heap of solid waste formed in the ore extraction process or for the foundation structure or surface structure of a sediment basin or a sealing structure for an edge dam of a tailings pond or sediment basin. Using waste fractions, especially tailings, in the structures of the tailings ponds of mines is economically sensible, because this way it is possible to minimize the transport costs of materials.

The poorly water permeable mineral sealing structure, which is not claimed, comprises at least one strengthened or strengthening material layer, a so-called synthetic hardpan layer, which is formed of a sealing material containing a reactive binding agent. The strengthening layer refers to a material layer, whose strengthening reaction is still in progress. As the strengthening reaction continues for a sufficiently long time, the material layer reaches the desired strength, and it becomes the strengthened material layer. In the sealing structure, at least part of the sealing material used in the formation of the material layer is waste fraction generated in the concentration process of the mining industry, such as so-called tailings or deposit, which has been processed thermally.

In an advantageous embodiment of the sealing structure, which is not claimed, the sealing material contains magnesium compounds, preferably magnesium oxide MgO, magnesite MgCO₃, magnesium hydroxide Mg(OH)₂ and/or magnesium sulphate (MgSO₄). Alternatively or additionally, the sealing material can contain calcium compounds, preferably calcium oxide CaO, calcium hydroxide Ca(OH)₂, calcium carbonate CaCO₃ and/or calcium sulphate (CaSO₄). Further, the sealing material can contain siderite (FeCO₃), iron oxide (Fe₂O₃, FeO), iron hydroxides (Fe(OH)₂, Fe(OH)₃ or iron sulphate Fe(SO₄).

In a second advantageous embodiment of the sealing structure, which is not claimed, the strengthened or strengthening material layer comprises a lower layer, an upper layer and a water permeable reinforcement layer between the upper and lower layer. The reinforcement layer can be filter cloth commonly used in earthworks.

In a third advantageous embodiment of the sealing structure, which is not claimed, below the said material layer there is a lower neutralizing protective layer and/or above the said material layer there is an upper neutralizing protective layer, which is formed of alkaline stone materials, such as calcite, dolomite or magnesite sand, ash or slag.

The sealing structure, which is not claimed, can be the sealing structure for a tailings bond of mining industry, waste rock heap, heap of solid waste formed in the ore extraction process or the sealing structure of a foundation or surface structure of a deposit basin or the sealing structure of an edge dam of a tailings pond or deposit basin.

It is an advantage of the invention that the hydraulic conductivity of the sealing structure is very low. The invention makes possible the fabrication of a sealing structure of mineral raw materials applicable to the isolation of highly detrimental substances. Thus, the invention offers an alternative for HDPE films or bitumen membranes commonly used in the foundation structures of basins and landfill areas, but it is also applicable to be used together with the above-mentioned substances.

It is further an advantage of the invention that the material of the sealing structure is practically free raw material, classified as waste. Thus, the material costs of the sealing structure are very low.

It is further an advantage of the invention that the manufacture of the sealing structure reduces the quantity of tailings to be stored in the tailings ponds, thus lengthening the operating life of the ponds.

The invention is next explained in detail, referring to the enclosed drawings, in which
Figure 1 presents in an exemplary manner the cross-section of a covering structure of a tailings pond manufactured using the method of the invention;
Figure 2 presents in an exemplary manner a diagrammatic view of a method of the invention; and
Figure 3 presents in an exemplary manner a diagrammatic view of the thermal and/or chemical processing of tailings, which is part of the method of the invention.

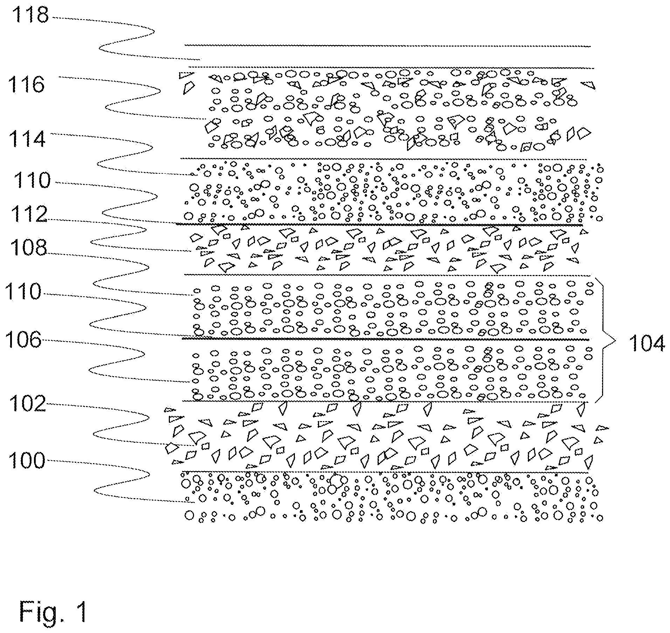

In Figure 1 there is illustrated in an exemplary manner a covering structure of a tailings pond manufactured using the method of the invention as a cross-sectional view. The covering structure is formed on top of the tailings layer 100 heaped onto the bottom of the pond. The covering structure has as the lowermost layer the lower neutralizing protective layer 102, the thickness of which can be 10-20 cm. The material of the protective layer is carbonate stone material, ash or slag. Suitable carbonate stone materials are e.g. calcite, dolomite and magnesite sand. Ash can be coal ash, peat ash or ash generated in the burning of bio fuels. Above the protective layer there is a strengthening material layer 104, a so-called synthetic hardpan layer. The hardpan layer has a lower layer 106, an upper layer 108 and between them a filter cloth 110. The upper and lower layers are formed of mineral sealing material, at least a part of which is waste fraction generated in the concentration process of mining industry, such as so-called tailings or deposit. The waste fraction is processed thermally and/or chemically to enhance the reactive characteristics of the waste fraction. The sealing material can be an entirely reactive substance, strengthening as binding agent, or it can include inert material. Preferably, the sealing material contains reactive substance, strengthening as binding agent in the amount of 20-80%, more preferably 30-60%, most preferably approximately 40% of the total mass of the sealing material. The rest of the sealing material can be unprocessed waste fraction, natural stone material or crushed stone.

The filter cloth functions as a water permeable reinforcement layer connecting the upper and lower layer. The lower and upper layers are formed to be of substantially uniform thickness so that the total thickness of the hardpan layer is 20-40 cm, preferably approximately 30 cm. On the upper surface of the synthetic hardpan layer there is an upper neutralizing protective layer 112, the thickness of which can be 10-20 cm. The task of the alkaline upper protective layer is to neutralize the waters running into the hardpan layer, reduce the vertical hydraulic conductivity of the sealing structure and prevent dusting.

Above the upper neutralizing layer there is a second filter cloth 10 functioning as a reinforcement layer, on top of which there is a deposition layer 114 formed of unprocessed tailings. The deposition layer contains slowly reacting iron compounds, because of which there occurs in the deposition layer in time the natural formation of the hardpan layer. Above the deposition layer there is, for example, a morainic surface layer 116 and uppermost a growth layer 118 functioning as substrate.

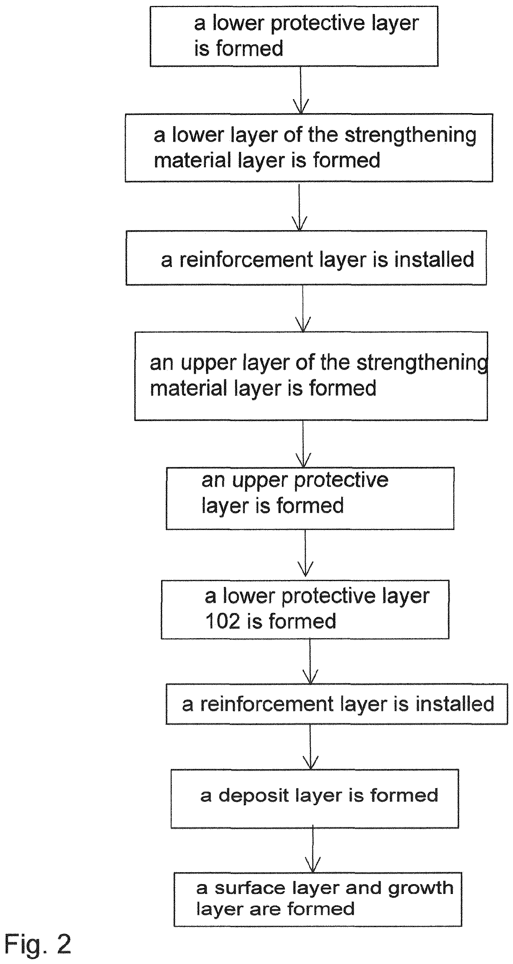

In Figure 2 there is illustrated in an exemplary manner a method for the manufacture of a mineral sealing structure as a diagrammatic view. In the method illustrated in Figure 1 there is manufactured a surface structure of a closable tailings pond. In the method, a lower neutralizing protective layer is formed onto the upper surface of the tailings layer by spreading a layer of carbonate stone material, ash or slag on top of the tailings. On top of the lower neutralizing protective layer there is formed a strengthening material layer functioning as the principal structural sealing layer, a so-called synthetic hardpan layer of the sealing material, at least a part of which is waste fraction generated in the concentration process of the mining industry, such as tailings or deposit. In the method, waste fraction is processed thermally and/or chemically so that the reactive characteristics of the waste fraction are improved. Of the sealing material containing processed waste fraction there is first formed a lower layer of substantially uniform thickness onto the lower neutralizing protective layer, onto which a filter cloth is installed as the reinforcement layer. An upper layer is formed onto the filter cloth of the same sealing material. As a consequence of the thermal and/or chemical processing, the waste fraction contains compounds reacting with water, due to which a synthetic, poorly water and oxygen permeable hardpan layer containing geo-polymeric bonds is formed of the sealing material. The filter cloth between the upper and lower layer attaches to the strengthening layers on its different sides, thus forming a reinforcement withstanding tensile stress in the middle of the hardpan layer. An upper neutralizing protective layer of carbonate stone material, ash or slag is formed onto the hardpan layer in the same way as the lower protective layer.

A filter cloth is installed onto the upper protective layer as reinforcement layer, on top which a deposition layer is formed. The deposition layer is formed by spreading a layer of unprocessed tailings onto the filter cloth. A surface layer of moraine is further formed onto the deposition layer, and a growth layer is installed onto the surface layer. After this the covering structure is finished. The formation of the material layers is carried out with conventional earthmoving machinery and methods, which are not explained in more detail here.

In the method illustrated in Figure 2, a lower neutralizing protective layer of alkaline material was formed between the tailings to be covered with the covering structure and the lower hardpan layer. In an advantageous embodiment of the method this lower protective layer is excluded and the synthetic hardpan layer is formed directly onto the tailings layer. In this embodiment, the surface section of the tailings layer to be covered and the lower layer below the filter cloth, containing thermally and/or chemically processed waste fraction are partly mixed with each other. Thus, a gradually changing transition zone is formed to the boundary surface of the layers instead of a sharp boundary surface.

In the method illustrated in Figure 2, there was fabricated a covering structure for a closable tailings pond. Using a respective method, it is also possible to form poorly water permeable structural layers of landfill areas for detrimental substances, such as waste rock heaps of the mining industry, heaps of solid waste generated in the ore extraction process, polluted soil heaps and foundation structures of refuse dumps.

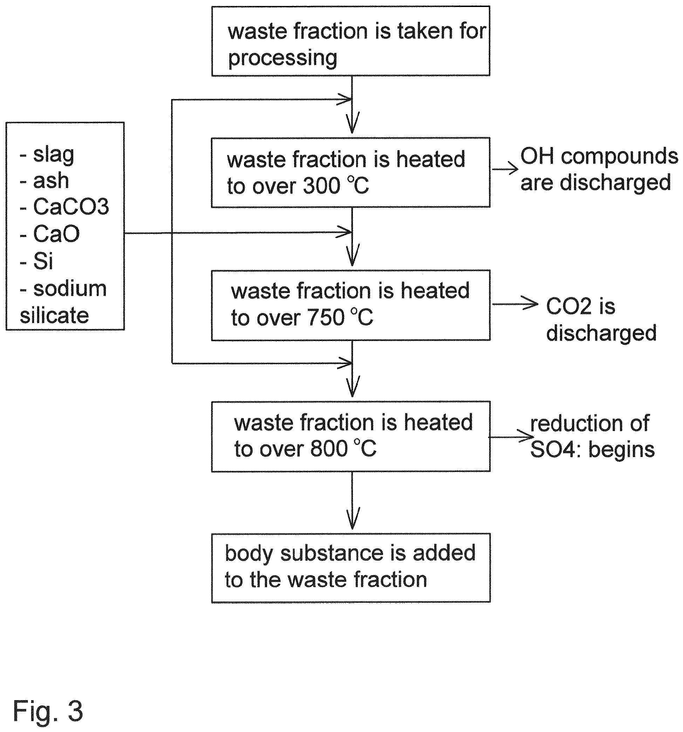

Figure 3 illustrates in an exemplary manner the thermal and/or chemical processing of waste fraction generated in the concentration process of the mining industry, such as tailings belonging to the method of the invention as a diagrammatical view. The thermal and/or chemical processing of waste fractions is used to enhance the reactive characteristics of the waste fraction and its ability to form geo-polymeric bonds. The optimal processing method depends largely on the characteristics of the waste fraction, i.e. the quality and quantity of compounds naturally contained in it and the availability and price of compounds which are to be possibly added into the waste fraction. In Figure 3 there is illustrated in an exemplary manner the thermal and chemical processing of a waste fraction containing magnesium oxide MgO, magnesite MgCO3, calcium oxide CaO, calcium carbonate CaCO3 and sulphates. In addition to these, the waste fraction can further contain slight amounts of other mineral compounds. In the processing, the enhancement of the reactive characteristics of the waste fraction is mainly based on the magnesium oxide contained in and formed into the waste fraction during the processing. If the waste fraction under processing does not naturally contain sufficient amounts of magnesium compounds, they can be added into the waste fraction before or during the processing.

In the method, a dose of waste fraction is brought into processing and the dose is transferred into an oven. In the oven, the waste fraction is heated to a temperature of at least 300°C and it is held in this temperature for so long that substantially all reactions to be achieved by heating have time to occur. In its simplest form, the thermal processing can be heating, by which free and poorly bound water is extracted from the waste fraction. By heating the waste fraction to a temperature of approximately 300°C, the free water and OH compounds in the waste fraction are discharged. Discharging the OH groups changes the composition of the waste fraction so that the waste fraction is given pozzolanic characteristics.

Thermal processing can be continued by heating the waste fraction to a temperature of over 750°C so that the magnesite in it disintegrates into magnesium oxide and carbon dioxide. Magnesium oxide is a very highly reacting compound, the increasing quantity of which accelerates the progress of the reinforcement reaction and improve the strength of the generating bonds. The waste fraction can be heated further to a temperature of over 800°C so that part of the sulphate ions contained in the sulphates in the waste fraction are reduced, which further accelerates the occurrence of the reactions. It can also be thought that the waste fraction is heated to 860-960°C so that the dolomite in it disintegrates into reactive substances. Nevertheless, heating to such a high temperature requires a lot of energy. Considering the strength and reaction speed, the optimal result is achieved if the temperature of the waste fraction is increased into at least 800°C. However, thermal processing can also be performed in lower temperatures, if sufficiently big improvement in reactive characteristics can be achieved in this way.

The occurrence of thermal reactions can be promoted and accelerated by adding into the waste fraction phosphorus, slag of the steel industry, calcium carbonate, calcium oxide, silicon, sodium silicate and/or ash and/or slag as the blend component. Ash can be ash generated in the burning of coal, peat or bio fuel. Adding the blend component can be made at any stage of the thermal processing.

Unprocessed waste fraction or inert body substance, such as crushed stone or natural stone material can be mixed with the thermally and chemically processed waste fraction so that the share of reactive substance of the total amount of the sealing material is 20-80%, preferably 30-60%, most preferably approximately 40%. Mixing the body substance with the processed waste fraction can be done immediately after the thermal processing or only in connection with the formation of the material layers of the sealing structure.

An advantageous embodiment of the method for manufacturing a mineral sealing structure of the invention have been explained above. The invention is not limited to the solutions explained, but the inventional idea can be applied in different ways within the limits of the patent claims.

## Claims

1. Method for the manufacture of a poorly water permeable mineral sealing structure, the hydraulic conductivity of which is at most 1*10⁻⁸ m/s, in which method a material layer (104) is formed of a sealing material containing magnesium compounds and/or calcium compounds as reactive binding agent and the material layer is allowed to strengthen into a so-called synthetic hardpan layer, **characterized in that** the material layer (104) is formed of a sealing material, at least a part of which is waste fraction generated in the concentration process of the mining industry, such as so-called tailings or deposit, which is processed thermally by heating to a temperature of at least 300°C, preferably to at least 750°C, most preferably to at least 800°C to enhance the reactive characteristics of the waste fraction.

2. Method according to claim 1, **characterized in that**, magnesium oxide MgO, magnesite MgCO₃, magnesium hydroxide Mg(OH)₂ and/or magnesium sulphate (MgSO₄) is arranged into the sealing material as magnesium compounds.

3. Method according to claim 1 or 2, **characterized in that**, calcium oxide CaO, calcium hydroxide Ca(OH)₂, calcium carbonate CaCO₃ and/or calcium sulphate (CaSO₄) is arranged into the sealing material as calcium compounds.

4. Method according to claim 1, **characterized in that** in the method the waste fraction is processed thermally to produce pozzolanic characteristics into the sealing material.

5. Method according to any of the claims 1-4, **characterized in that** the waste fraction is processed chemically by adding phosphorus (P), slag of the steel industry, ash and/or reactive silicon compound, preferably amorphic silicon (Si) into the waste fraction, to adjust the speed of the strengthening reaction and the characteristics of the forming strengthening material layer (104).

6. Method according to claim 5, **characterized in that** the waste fraction is alkalized with sodium and/or potassium compounds, especially sodium silicate.

7. Method according to any of the claims 1-6, **characterized in that** a lower layer (106) is formed of the sealing material, a water permeable reinforcement layer, such as a filter cloth (110) is installed onto the lower layer, and an upper layer (108) is formed of the sealing material onto the reinforcement layer.

8. Method according to any of the claims 1-7, **characterized in that** a lower neutralizing protective layer (102) of alkaline stone materials, such as calcite, dolomite or magnesite sand, ash and/or slag is formed below the strengthening material layer (104).

9. Method according to any of the claims 1-8, **characterized in that** the strengthening material layer (104) is formed onto the tailings layer (100) and that the tailings layer (100) is mixed from its surface section into the material of the strengthening material layer (104).

10. Method according to any of the claims 1-9, **characterized in that** an upper neutralizing protective layer (102) is formed of alkaline stone materials, such as calcite, dolomite or magnesite sand, ash and/or slag above the strengthening material layer (104).

11. Method according to any of the claims 1-10, **characterized in that** the method is used to manufacture a sealing structure for the tailings pond of the mining industry, waste rock heap, solid waste heap forming in the ore extraction process or a foundation structure or surface structure of a deposit basin or an edge dam for a tailings pond or deposit basin.

## Patentansprüche

1. Verfahren zur Herstellung einer schlecht wasserdurchlässigen mineralischen Dichtungsstruktur, deren hydraulische Leitfähigkeit höchstens 1 *10⁻⁸ m/s beträgt, in welchem Verfahren eine Materialschicht (104) aus einem Dichtungsmaterial gebildet wird, das Magnesiumverbindungen und/oder Calciumverbindungen als reaktives Bindemittel enthält, und die Materialschicht zu einer sogenannten synthetischen Ortsteinschicht verfestigen gelassen wird, **dadurch gekennzeichnet, dass** die Materialschicht (104) aus einem Dichtungsmaterial gebildet wird, von dem zumindest ein Teil eine im Konzentrationsprozess der Bergbauindustrie anfallende Abfallfraktion wie sogenannte Tailings oder eine Ablagerung ist, die thermisch durch Erhitzen auf eine Temperatur von mindestens 300°C, vorzugsweise auf mindestens 750°C, am meisten bevorzugt auf mindestens 800°C, behandelt wird, um die reaktiven Eigenschaften der Abfallfraktion zu verbessern.

2. Verfahren nach Anspruch 1, **dadurch gekennzeichnet, dass** Magnesiumoxid MgO, Magnesit MgCO₃, Magnesiumhydroxid Mg(OH)₂ und/oder Magnesiumsulfat (MgSO₄) als Magnesiumverbindungen in das Dichtungsmaterial eingebracht werden.

3. Verfahren nach Anspruch 1 oder 2, **dadurch gekennzeichnet, dass** Calciumoxid CaO, Calciumhydroxid Ca(OH)₂, Calciumcarbonat CaCO₃ und/oder Calciumsulfat (CaSO₄) als Calciumverbindungen in das Dichtungsmaterial eingebracht werden.

4. Verfahren nach Anspruch 1, **dadurch gekennzeichnet, dass** bei dem Verfahren die Abfallfraktion thermisch behandelt wird, um puzzolanische Eigenschaften in dem Dichtungsmaterial zu erzeugen.

5. Verfahren nach einem der Ansprüche 1-4, **dadurch gekennzeichnet, dass** die Abfallfraktion chemisch verarbeitet wird, indem Phosphor (P), Schlacke der Stahlindustrie, Asche und/oder eine reaktive Siliziumverbindung, vorzugsweise amorphes Silizium (Si), in die Abfallfraktion zugegeben wird, um die Geschwindigkeit der Verfestigungsreaktion und die Eigenschaften der sich bildenden Verfestigungsmaterialschicht (104) anzupassen.

6. Verfahren nach Anspruch 5, **dadurch gekennzeichnet, dass** die Abfallfraktion mit Natrium- und/oder Kaliumverbindungen, insbesondere Natriumsilikat, alkalisiert wird.

7. Verfahren nach einem der Ansprüche 1-6, **dadurch gekennzeichnet, dass** eine untere Schicht (106) aus dem Dichtungsmaterial gebildet wird, eine wasserdurchlässige Verstärkungsschicht wie ein Filtergewebe (110) auf der unteren Schicht angebracht wird und eine obere Schicht (108) aus dem Dichtungsmaterial auf der Verstärkungsschicht gebildet wird.

8. Verfahren nach einem der Ansprüche 1-7, **dadurch gekennzeichnet, dass** eine untere neutralisierende Schutzschicht (102) aus alkalischen Gesteinsmaterialien wie Calcit-, Dolomit- oder Magnesitsand, Asche und/oder Schlacke unter der Verfestigungsmaterialschicht (104) gebildet wird.

9. Verfahren nach einem der Ansprüche 1-8, **dadurch gekennzeichnet, dass** die Verfestigungsmaterialschicht (104) auf der Tailings-Schicht (100) ausgebildet wird und dass die Tailings-Schicht (100) von ihrem Oberflächenbereich her in das Material der Verfestigungsmaterialschicht (104) eingemischt wird.

10. Verfahren nach einem der Ansprüche 1-9, **dadurch gekennzeichnet, dass** eine obere neutralisierende Schutzschicht (102) aus alkalischen Gesteinsmaterialien wie Calcit-, Dolomit- oder Magnesitsand, Asche und/oder Schlacke über der Verfestigungsmaterialschicht (104) gebildet wird.

11. Verfahren nach einem der Ansprüche 1 bis 10, **dadurch gekennzeichnet, dass** das Verfahren zur Herstellung einer Dichtungsstruktur für den Tailings-Teich des Bergbaus, eine Abraumhalde, eine bei der Erzgewinnung entstehende Feststoffhalde oder eine Gründungsstruktur oder Oberflächenstruktur eines Ablagerungsbeckens oder eines Randdammes für einen Tailings-Teich oder ein Ablagerungsbecken verwendet wird.

## Revendications

1. Procédé de fabrication d'une structure d'étanchéité minérale peu perméable à l'eau, dont la conductivité hydraulique est d'au plus 1*10⁻⁸ m/s, dans lequel une couche de matériau (104) est formée d'un matériau d'étanchéité contenant des composés de magnésium et/ou des composés de calcium comme agent de liaison réactif et la couche de matériau est amenée à se renforcer en une couche dite de cuir synthétique, **caractérisé en ce que** la couche de matériau (104) est formée d'un matériau d'étanchéité, dont au moins une partie est constituée d'une fraction de déchets générée dans le processus de concentration de l'industrie minière, telle que ce que l'on appelle les résidus ou les dépôts, qui est traitée thermiquement par chauffage à une température d'au moins 300 °C, de préférence d'au moins 750 °C, de manière préférée entre toutes d'au moins 800 °C, pour améliorer les caractéristiques réactives de la fraction de déchets.

2. Procédé selon la revendication 1, **caractérisé en ce que** de l'oxyde de magnésium MgO, de la magnésite MgCO₃, de l'hydroxyde de magnésium Mg(OH)₂ et/ou du sulfate de magnésium (MgSO₄) sont disposés dans le matériau d'étanchéité en tant que composés de magnésium.

3. Procédé selon la revendication 1 ou 2, **caractérisé en ce que** de l'oxyde de calcium CaO, de l'hydroxyde de calcium Ca(OH)₂, du carbonate de calcium CaCO₃ et/ou du sulfate de calcium (CaSO₄) sont disposés dans le matériau d'étanchéité en tant que composés de calcium.

4. Procédé selon la revendication 1, **caractérisé en ce que** dans le procédé, la fraction de déchets est traitée thermiquement pour produire des caractéristiques pouzzolaniques dans le matériau d'étanchéité.

5. Procédé selon l'une quelconque des revendications 1 à 4, **caractérisé en ce que** la fraction de déchets est traitée chimiquement par ajout de phosphore (P), de scories de l'industrie sidérurgique, de cendres et/ou d'un composé de silicium réactif, de préférence du silicium amorphe (Si), dans la fraction de déchets, pour ajuster la vitesse de la réaction de renforcement et les caractéristiques de la couche de matériau de renforcement en formation (104).

6. Procédé selon la revendication 5, **caractérisé en ce que** la fraction de déchets est alcalinisée avec des composés de sodium et/ou de potassium, notamment du silicate de sodium.

7. Procédé selon l'une quelconque des revendications 1 à 6, **caractérisé en ce qu'**une couche inférieure (106) est formée du matériau d'étanchéité, une couche de renforcement perméable à l'eau, telle qu'un tissu filtrant (110), est installée sur la couche inférieure, et une couche supérieure (108) est formée du matériau d'étanchéité sur la couche de renfort.

8. Procédé selon l'une quelconque des revendications 1 à 7, **caractérisé en ce qu'**une couche protectrice neutralisante inférieure (102) de matériaux pierreux alcalins, tels que du sable, des cendres et/ou du laitier de calcite, de dolomie ou de magnésite est formée sous la couche de matériau de renforcement (104).

9. Procédé selon l'une quelconque des revendications 1 à 8, **caractérisé en ce que** la couche de matériau de renforcement (104) est formée sur la couche de résidus (100) et que la couche de résidus (100) est mélangée depuis sa section de surface dans le matériau de la couche de matériau de renforcement (104).

10. Procédé selon l'une quelconque des revendications 1 à 9, **caractérisé en ce qu'**une couche protectrice neutralisante supérieure (102) est formée de matériaux pierreux alcalins, tels que du sable, des cendres et/ou du laitier de calcite, de dolomie ou de magnésite, au-dessus de la couche de matériau de renforcement (104).

11. Procédé selon l'une quelconque des revendications 1 à 10, **caractérisé en ce que** le procédé est utilisé pour fabriquer une structure d'étanchéité pour le bassin de résidus de l'industrie minière, le tas de roches de déchets, le tas de déchets solides se formant dans le processus d'extraction du minerai ou une structure de fondation ou une structure de surface d'un bassin de dépôt ou d'une digue en bordure d'un bassin de résidus ou d'un bassin de dépôt.
